# EUROPÄISCHE PATENTANMELDUNG

(11) **EP 4 105 427 A1**
(43) Veröffentlichungstag der Anmeldung: **21.12.2022**
(21) Anmeldenummer: 22178081.0
(22) Anmeldetag: 09.06.2022
(51) Int. Cl.: E05G 1/08, E05G 1/14, B60P 3/03

(54) **TRANSPORTSICHERHEITSBEHÄLTER ZUM TRANSPORT VON WERTGEGENSTÄNDEN UND TRANSPORTFAHRZEUG ZUM TRANSPORT EINES TRANSPORTSICHERHEITSBEHÄLTERS**

(30) Priorität: 16.06.2021 DE 102021115616
(71) Anmelder: Automation&Software Günther Tausch GmbH, 17034 Neubrandenburg (DE); WSN-Sicherheit und Service GmbH, 17033 Neubrandenburg (DE)
(72) Erfinder: Marlow, Mandy, 17034 Neubrandenburg (DE); Schmidt, Harnid, 17033 Neubrandenburg (DE); Tausch, Günther, 17099 Datzetal (DE)
(74) Vertreter: Weidner Stern Jeschke

(57) **Zusammenfassung**

Die Erfindung betrifft einen Transportsicherheitsbehälter zum Transport von Wertgegenständen, wobei der Transportsicherheitsbehälter mindestens ein verschließbares Fach zur Aufnahme einer zuordenbaren Kassette mit einem Gehäuse und eine Einfärbeeinrichtung zum Einfärben von in der Kassette gelagerten Wertgegenständen aufweist, wobei die Einfärbeeinrichtung innerhalb des mindestens einem Fach benachbart zur zuordenbaren Kassette angeordnet ist und eine Aktivierungseinheit und einen Farbbehälter aufweist, wobei die Einfärbeeinrichtung eine Durchstoßeinrichtung zum Durchstoßen des Gehäuses der zuordenbaren Kassette aufweist, sodass im Sicherheitsfall das Gehäuse der zugeordneten Kassette mittels der Durchstoßeinrichtung von außen durchstoßbar ist und mittels der Aktivierungseinheit eine Farbe aus dem Farbbehälter über die Durchstoßeinrichtung in ein Inneres der Kassette zum Einfärben der Wertgegenstände einbringbar ist. Des Weiteren betrifft die Erfindung ein Transportfahrzeug.

## Beschreibung

Die Erfindung betrifft einen Transportsicherheitsbehälter zum Transport von Wertgegenständen, wobei der Transportsicherheitsbehälter mindestens ein verschließbares Fach zur Aufnahme einer zuordenbaren Kassette mit einem Gehäuse und eine Einfärbeeinrichtung zum Einfärben von in der Kassette gelagerten Wertgegenständen aufweist, wobei die Einfärbeeinrichtung innerhalb des mindestens einen Fach benachbart zur zuordenbaren Kassette angeordnet ist und eine Aktivierungseinheit und einen Farbbehälter aufweist. Des Weiteren betrifft die Erfindung ein Transportfahrzeug zum Transport eines Transportsicherheitsbehälters.

Für den Transport von Wertgegenständen und/oder Geld werden üblicherweise einzelne Geldkassetten oder Transportbehälter mit mehreren Geldkassetten verwendet. Bei bekannten Transportbehältern ist die Anzahl der transportierbaren Kassetten in einem Behälter üblicherweise auf maximal vier Kassetten begrenzt, da dieser ansonsten aufgrund des Gewichtes der gefüllten Kassetten nicht mehr von einer Person gehandhabt werden kann. Üblicherweise weist eine gefüllte Kassette ein Gewicht von ca. 30 kg auf. Um Gewicht einzusparen, ist die Geldkassette und/oder der Transportbehälter häufig aus Kunststoff gefertigt, dadurch aber leicht aufzubrechen.

Aus Versicherungsgründen müssen die in einer Geldkassette gelagerten Wertgegenstände, vor allem Geldscheine, mittels eines Färbemittels eingefärbt werden, wenn die Geldkassette unberechtigt geöffnet oder zerstört wird. Durch das Einfärben wird zudem das Wiederauffinden der Kassette und/oder der markierten Wertgegenstände und Geldscheine erleichtert.

Aus der DE 10 2007 015 382 B4 ist ein System zur Aufbewahrung von Wertgegenständen mit einer Kassette offenbart, wobei die Kassette einen Anschluss zum Einbringen eines Markierungsmittels aufweist, und das System eine an dem Anschluss ankoppelbare Injektionseinrichtung zum Einbringen des Markierungsmittels aufweist, wobei die Injektionseinrichtung in einem Transportbehälter für die Kassette eingebaut oder einem Transportbehälter zugeordnet ist. Nachteilig hierbei ist, dass die Kassette mit dem Anschluss speziell konfektioniert sein muss und der Anschluss von vornherein eine Öffnung im Gehäuse der Kassette darstellt.

Üblicherweise werden jedoch Kassetten mit sehr unterschiedlichen Formen und Abmessungen zum Transport in einem Transportbehälter und/oder zur Verwendung in Geldautomaten, Geldwechslern, Fahrkartenautomaten und ähnlichem verwendet.

Die DE 10 2020 214 749 A1 betrifft einen manuellen Förderer für Geldkassetten, welcher manuell von einem Benutzer geführt wird und eine Formstruktur mit Rohrelementen und unterschiedlich großen Rollen aufweist, welche die Verlagerung der Geldkassetten über Hindernisse erleichtert.

Das Dokument DE 600 25 493 T2 offenbart ein mobiles Sicherheitsgehäuse, welches mit einem automatischen Ausgabegerät zusammenwirken kann, wobei ein Inhalt eines in dem mobilen Sicherheitsgehäuse aufgenommenen Behälters für das Ausgabegerät ohne Bloßlegen des Behälters verfügbar gemacht werden kann. Jeder Behälter weist ein Zuführmittel zum Zuführen eines Makulierungsmittels, beispielsweise Tinte, auf, wobei ein Reservoir des Makulierungsmittels innerhalb des Sicherheitsgehäuses oder innerhalb des jeweiligen Behälters angeordnet sein kann.

Die DE 698 14 924 T2 offenbart eine Sicherheitsvorrichtung für die Verwendung innerhalb eines Geldautomaten, wobei die Sicherheitsvorrichtung ein Koppelmittel zum Verbinden mit einer Geldkassette des Geldautomaten und Markierungsmittel zum Unbrauchbarmachen des Inhaltes der Geldkassette aufweist. Das Koppelmittel weist eine männliche Komponente auf, welche an dem Geldautomaten befestigt ist, und eine weibliche Komponente, welche auf einer Geldkassette angebracht ist.

Aus der DE 15 84 286 A ist eine Einrichtung zum Transport von Wertsachen und zur Diebstahlsicherung bekannt, bei welcher mittels einer Energiespeichergruppe ein Markierungsstoff durch Druckbeaufschlagung freigesetzt und aus einem Speicher in eine zugeordnete Kassette, beispielsweise mittels einer verbindenden Rohrleitung, überführt wird.

In der EP 1 843 000 B1 ist ein Sicherheitssystem zum Lagern und Transportieren von Wertgegenständen mit einer Ad-Hoc-Vernetzung einzelner Komponenten offenbart, bei welchem in einem Sicherheitsbehälter eine elektrische Schutzschaltung mit einem Infrarot-Empfänger angeordnet ist, der Aufbewahrungsbehälter zum Aufnehmen des Sicherheitsbehälters einen korrespondierenden Infrarot-Sender aufweist und mittels eines optischen Fensters eine Sichtverbindung zwischen dem Infrarot-Empfänger und dem Infrarot-Sender ermöglicht ist.

Aus der EP 1 690 733 A1 ist ein Wertguttransportfahrzeug mit voneinander abgeschlossenen Fahrerraum, Laderaum zur Aufnahme von mindestens einem Rollcontainer und Schleusenraum bekannt, wobei im Laderaum eine Vorrichtung zum Transport einer vorgebbaren Anzahl von Wertgutbehältern aus dem Laderaum in den Schleusenraum oder umgekehrt durch eine in einer Zwischenwand von Laderaum und Schleusenraum angeordnete Öffnung angeordnet ist.

Die EP 1 961 902 A1 offenbart ein Regal zum Transportieren von Wertgegenständen mit mindestens einer Aussparung zum Halten und Aufbewahren der Wertgegenstände, welches aus gepanzertem Material gefertigt ist und Intelligenzmittel, wie eine Sabotagesicherung, geographische Lokalisation und/oder Kommunikation, aufweist.

Nachteilig bei bekannten Sicherungs- und/oder Einfärbevorrichtungen für Wertkassetten und/oder Transportbehälter ist, dass diese eine bauliche Veränderung von handelsüblichen Kassetten und/oder einen Durchbruch durch die Kassettenwand zum Einbringen eines Markierungsmittels benötigen. Dadurch ist eine bauliche Anpassung zwischen der jeweiligen Kassette und der Sicherungs- und/oder Markierungsvorrichtung erforderlich, welche eine einfache und flexible Nutzung von unterschiedlich ausgestalteten Kassetten in einem Transportbehälter erschwert.

Aufgabe der Erfindung ist es, den Stand der Technik zu verbessern.

Gelöst wird die Aufgabe durch einen Transportsicherheitsbehälter zum Transport von Wertgegenständen, wobei der Transportsicherheitsbehälter mindestens ein verschließbares Fach zur Aufnahme einer zuordenbaren Kassette mit einem Gehäuse und eine Einfärbeeinrichtung zum Einfärben von in der Kassette gelagerten Wertgegenständen aufweist, wobei die Einfärbeeinrichtung innerhalb des mindestens einen Fach benachbart zur zuordenbaren Kassette angeordnet ist und eine Aktivierungseinheit und einen Farbbehälter aufweist, wobei die Einfärbeeinrichtung eine Durchstoßeinrichtung zum Durchstoßen des Gehäuses der zuordenbaren Kassette aufweist, sodass im Sicherheitsfall das Gehäuse der zugeordneten Kassette mittels der Durchstoßeinrichtung von außen durchstoßbar ist und mittels der Aktivierungseinheit eine Farbe aus dem Farbbehälter über die Durchstoßeinrichtung in ein Inneres der Kassette zum Einfärben der Wertgegenstände einbringbar ist..

Somit wird ein Transportsicherheitsbehälter bereitgestellt, bei dem mittels der Einfärbeeinrichtung im Sicherheitsfall die notwendige Einfärbung von Wertgegenständen und/oder Geldscheinen frei von einer bestimmten Ausgestaltung und/oder baulichen Veränderung der Kassette realisiert ist. Es ist besonders vorteilhaft, dass mittels der Durchstoßeinrichtung nur im Sicherheitsfall das Gehäuse der Kassette durchstoßen und somit eine Öffnung in die Kassette zum Einleiten der Farbe in das Innere der Kassette eingebracht wird. Somit muss die Kassette nicht für eine Injektion der Farbe vorkonfektioniert sein und jegliche Art und/oder Form von Kassetten kann in das jeweilige Fach des Transportsicherheitsbehälters eingelegt und sicher transportiert werden.

Ein wesentlicher Gedanke der Erfindung beruht darauf, erst im Alarm- und/oder Sicherheitsfall eine Verbindung zwischen der Einfärbeeinrichtung und der Geldkassette, welche beide in einem Fach des Transportsicherheitsbehälters angeordnet sind, mittels der Durchstoßeinrichtung herzustellen, wobei die Durchstoßeinrichtung aufgrund der Bewegung beim Durchstoßen selbst die direkte Verbindung von außen in das Innere der Kassette ausbildet. Vor allem ist eine Fluidverbindung, wie ein Schlauch oder Rohr, zwischen der Einfärbeeinrichtung und dem Inneren der Kassette nicht erforderlich, da nach dem Durchstoßen des Gehäuses der Kassette direkt über die Durchstoßeinrichtung selbst eine Farbe aus dem Farbbehälter in das Innere der Kassette einleitbar ist.

Folgendes Begriffliche sei erläutert:
Ein "Transportsicherheitsbehälter" ist insbesondere jeglicher Behälter zum gesicherten Transport und/oder zur Lagerung von Wertgegenständen. Bei einem Transportsicherheitsbehälter kann es sich um einen bewegbaren und/oder feststehenden Behälter handeln. Bei einem Transportsicherheitsbehälter kann es sich beispielsweise um einen Schrank, einen Koffer, eine Tasche und/oder einen Container handeln. Der Transportsicherheitsbehälter weist mindestens ein verschließbares Fach zur Aufnahme einer Kassette auf. Bei einem Transportsicherheitsbehälter kann es sich auch um einen Tresor oder einen Geldtransport-Safe handeln. Bevorzugt stellt der Transportsicherheitsbehälter ein geschlossenes und/oder schließbares System für zwei oder mehrere Geld- und/oder Wertkassetten dar.

Bei einem "Fach" handelt es sich insbesondere um eine Aussparung, eine Öffnung und/oder einen Hohlraum im Transportsicherheitsbehälter zum Aufnehmen und/oder Halten einer Kassette. Bei einem Fach kann es sich auch um ein einseitig, insbesondere seitlich, offenes Behältnis handeln. Die Geldkassette wird bevorzugt jeweils in einem einzelnen Fach in dem Transportsicherheitsbehälter aufgenommen, wodurch eine einfache und gezielte Entnahme der jeweiligen Kassette ermöglicht ist. Hierbei weist das Fach bevorzugt an einer Seite eine deutlich größere Abmessung als die jeweilige Kassette auf, sodass ein Bauraum zur Anordnung der Einfärbeeinrichtung zwischen einer Innenwand des Faches und einer Außenwand der Kassette zur Verfügung steht. Bevorzugt weist das Fach eine höhere Höhe als die Kassette auf, sodass die Einfärbeeinrichtung oberhalb der Oberseite der Kassette in dem Fach anordenbar angeordnet ist. Dadurch kann die Einfärbeeinrichtung an die Decke des Faches montiert sein und mittels der Durchstoßeinrichtung im Sicherheitsfall das Gehäuse und/oder den Kassettendeckel durchschlagen.

Bei einer "Kassette" handelt es sich insbesondere um einen schließbaren und/oder abschließbaren Behälter zur sicheren Aufbewahrung von Wertgegenständen in seinem Inneren. Die Kassette weist dazu ein umgebendes Gehäuse und/oder einen öffenbaren Deckel auf. Die Kassette kann ein Material oder verschiedene Materialien aufweisen, wie beispielsweise Metall, Edelstahl, Aluminium, Kunststoff und/oder einen Verbundwerkstoff. Gegenüber einer klassischen Geldkassette muss die Kassette nicht zwingend aus einem Material bestehen, das einen unbefugten Zugriff durch Gewalt verzögert und/oder erkennbar macht, da die Kassette von außen mittels der Einfärbeeinrichtung gesichert ist. Somit kann die Kassette ein leichtes Material, wie beispielsweise Kunststoff, aufweisen, wodurch deren Gehäuse auch leicht mittels der Durchstoßeinrichtung durchstoßbar ist. Es ist jedoch herauszustellen, dass für die Durchstoßbarkeit des Gehäuses der Kassette nicht ein bestimmtes Material erforderlich ist und die Durchstoßbarkeit neben dem Material und der gewählten Materialstärke des Gehäuses der Kassette auch von der Materialeigenschaft der Durchstoßeinrichtung und deren Materialstärke sowie der Kraft der Durchstoßbewegung abhängt. Prinzipiell kann neben dem frei wählbaren Material die Kassette auch jede Form und/oder Abmessung aufweisen. Beispielsweise kann die Kassette als Geldkassette eine Breite in einem Bereich von 210 mm bis 440 mm, eine Tiefe von 180 mm bis 270 mm und eine Höhe von 100 mm bis 150 mm aufweisen. Bei Lagerung von 2.000 50-Euro-Scheinen weist die Geldkassette in diesem Fall ein Gewicht von 7 kg und ein Leergewicht von circa 1 kg auf.

Eine "Einfärbeeinrichtung" ist insbesondere eine Einrichtung, mittels der ein Farbstoff zum Einfärben von in der Kassette gelagerten Wertgegenständen in das Innere der Kassette einbringbar ist. Die Einfärbeeinrichtung ist insbesondere innerhalb des mindestens einen Faches und/oder benachbart zu einer zuordenbaren Kassette angeordnet. Die Einfärbeeinrichtung weist insbesondere eine Durchstoßeinrichtung zum Durchstoßen des Gehäuses der zuordenbaren Kassette, einen Farbbehälter und eine Aktivierungseinheit, wie beispielsweise eine Gas- und/oder Zündquelle auf. Bei der Aktivierungseinheit kann es sich beispielsweise um eine Platzpatrone oder Gaskartusche handeln. Sobald im Sicherheitsfall mittels der Durchstoßeinrichtung das Gehäuse der Kassette durchstoßen und dadurch eine direkte Fluidverbindung, beispielsweise über eine Hohlnadel, zwischen der Einfärbeeinrichtung und dem Inneren der Kassette ausgebildet ist, ist mittels der Aktivierungseinheit eine Farbe aus dem Farbbehälter durch und/oder über die Durchstoßeinrichtung in das Innere der Kassette zum Einfärben der Wertgegenstände einbringbar.

Unter einer "Durchstoßeinrichtung" wird insbesondere jede Einrichtung verstanden, welche in das Gehäuse der jeweiligen Kassette ein Loch einbringt, durch welches Farbe aus dem Farbbehälter in das Innere der Kassette eintreten kann. Dazu kann die Durchstoßeinrichtung insbesondere eine Hohlnadel, Kanüle und/oder Injektionsnadel aufweisen, welche bevorzugt beim Durchstoßen direkt das Loch in das Gehäuse einbringt und durch dieses bis in das Innere der Kassette durchsticht. Ebenso kann die Durchstoßeinrichtung insbesondere jegliches andere gerade oder schräg abgeschnittene dünne Röhrchen zum Durchstoßen aufweisen. Hierbei kann die jeweilige Nadel oder das Röhrchen eine scharf angeschliffene Spitze aufweisen.

Unter "Wertgegenständen" werden jegliche Wertsachen verstanden, welche gegen den Verlust und/oder Diebstahl geschützt werden sollen. Bei den Wertgegenständen kann es sich beispielsweise um Bargeld, Schecks, Wertpapiere, Edelmetalle, Schmuck und/oder sonstige gesichert aufzubewahrende Gegenstände, wie beispielsweise Waffen oder Datenträger, handeln.

In einer weiteren Ausführungsform weist der Transportsicherheitsbehälter ein zweites verschließbares Fach, ein drittes verschließbares Fach, ein viertes verschließbares Fach und/oder weitere verschließbare Fächer, bevorzugt insgesamt acht verschließbare Fächer, auf, wobei jeden verschließbaren Fach eine jeweilige Kassette zuordenbar ist und/oder jedes verschließbare Fach eine Färbeeinrichtung aufweist.

Bevorzugt weist der Transportsicherheitsbehälter mehrere Fächer auf, wobei die Fächer einzeln verschließbar sein können oder der gesamte Transportsicherheitsbehälter selbst, beispielsweise mittels einer Sicherheitstür, verschließbar ist. Somit sind beispielsweise acht Geldkassetten gleichzeitig mittels des Transportsicherheitsbehälters transportierbar. Prinzipiell ist anzumerken, dass auch mehrere Kassetten in einem einzigen Fach angeordnet sein können und/oder eine Einfärbeeinrichtung mehrere Durchstoßeinrichtungen aufweist, wobei mittels einer jeweiligen Durchstoßeinrichtung jeweils ein Gehäuse einer Kassette durchstoßbar ist. Bevorzugt weist jedoch der Transportsicherheitsbehälter zwei oder mehrere Fächer auf, wobei in jedem Fach jeweils eine Kassette anordenbar ist und/oder in jedem Fach jeweils eine Einfärbeeinrichtung angeordnet und einer jeweils Kassette zugeordnet ist.

Bei einem zweiten, dritten, vierten und/oder weiteren verschließbaren Fach handelt es sich in der Ausgestaltung und Funktion um ein oben definiertes Fach. Hierbei können Fächer jedoch unterschiedliche Abmessungen, Formen und/oder Materialien aufweisen.

Bei einer jeweiligen Kassette handelt es sich in der Ausgestaltung und Funktion um eine oben definierte Kassette. Zwei oder mehrere Kassetten können insbesondere dieselbe Form und/oder Abmessungen oder unterschiedliche Formen und/oder unterschiedliche Abmessungen sowie dasselbe Material oder unterschiedliches Material aufweisen.

Um eine ungewollte Entnahme der Kassette zu verhindern und eine ortsfeste, definierte Position der Kassette im Fach beim Durchstoßen zu gewährleisten, weist die Färbeeinrichtung oder weisen die Färbeeinrichtungen eine Hubeinrichtung zum Einklemmen der jeweiligen Kassette auf, wobei die Hubeinrichtung zwischen einer Innenseite des jeweiligen Faches und einer Außenseite des Gehäuses der zuordenbaren Kassette angeordnet ist.

Hierbei ist es vorteilhaft, dass zusätzlich mittels einer Hubeinrichtung, die zwischen einer Innenwand des Faches und einer Außenwand der Kassette angeordnet ist, die jeweilige Kassette zwischen der Hubeinrichtung und einer Innenwand des Faches eingeklemmt und somit sicher gehalten wird. Dadurch wird zum einen ein unberechtigtes Entfernen der Kassette aus dem Fach erschwert, zum anderen wird durch das Einspannen der Kassette ein Verrutschen während des Durchstoßens mittels der Durchstoßeinrichtung verhindert. Dadurch wird jegliche Art von Kassette sicher innerhalb des Faches gehalten und die Kippsicherheit des Transportsicherheitsbehälters erhöht.

Bevorzugt ist die Einfärbeeinrichtung so angeordnet, dass die Hubeinrichtung oben an der Decke des Faches und unten auf den darunterliegenden Kassettendeckel anliegt und/oder andrückt. Die Hubeinrichtung weist bevorzugt eine Höhenverstellbarkeit auf, welche mittels eines mechanischen, elektrischen, pneumatischen und/oder hydraulischen Antrieb realisierbar ist. Die Höhenverstellbarkeit ist frei je nach Art der Kassette, Anzahl der Kassetten und/oder Höhe des jeweiligen Faches anpassbar. Beispielsweise beträgt die Höhenverstellbarkeit > 50 mm, insbesondere > 60 mm, bevorzugt > 70 mm.

Bevorzugt ist die Hubeinrichtung als Scherenhub ausgebildet, wodurch eine niedrige Höhe, eine einfache Hemmung gegen unerwünschte Bewegung, eine Steifigkeit und gleichzeitig ein geringer Verschleiß realisiert sind. Die Hubeinrichtung ist derart in und/oder an der Einfärbeeinrichtung angeordnet, dass die Hubeinrichtung selbst entnehmbar und/oder austauschbar ist. Dadurch kann beispielsweise eine Hubeinrichtung gegen eine andere Hubeinrichtung mit einer höheren oder niedrigeren Hubhöhe ausgetauscht und in einfacher Weise eine Anpassung an die Fachhöhe und/oder den zu sichernden Gegenstand erfolgen. Durch die Höheneinstellbarkeit der Hubeinrichtung ist die Einfärbeeinrichtung an jegliche Abmessungen von Geldkassetten und Fächern anpassbar.

Die Einfärbeeinrichtung ist derart ausgebildet, dass diese als komplettes, kompaktes System ausgetauscht werden kann. Prinzipiell ist herauszustellen, dass aufgrund der Austauschbarkeit der Hubeinrichtung und/oder der Einfärbeeinrichtung jeglicher Gegenstand, nicht nur Wertkassetten, in jeder Art von Fach, beispielweise auch in einem Schließfach in einem Bahnhof, gesichert werden kann. Ebenso kann prinzipiell auch die Hubeinrichtung an sich ohne Einfärbung zur mechanischen Lagefixierung eines Gegenstandes in einem Fach und somit als Diebstahlschutz verwendet werden.

Unter "Hubeinrichtung" wird insbesondere eine Einrichtung verstanden, bei der in mindestens einer räumlichen Richtung die Ausdehnung der Hubeinrichtung in dieser Richtung veränderbar, insbesondere vergrößerbar oder verkleinerbar, ist. Bevorzugt findet mittels der Hubeinrichtung eine Höhenverstellung und/oder eine Vergrößerung oder Verkleinerung der Abmessung der Hubeinrichtung in vertikaler Richtung statt. Dazu weist die Hubeinrichtung insbesondere einen mechanischen, elektrischen, pneumatischen und/oder hydraulischen Antrieb auf. Beispielsweise kann die Hubeinrichtung einen Drehantrieb mit Scherenhub und Verstellung über Gewindestangen aufweisen. Die Ausbildung der Hubeinrichtung als Scherenhub weist insbesondere die Vorteile einer niedrigen Höhe, einer Hemmung gegen unerwünschte Bewegung, eine notwendige Steifigkeit und einen geringeren Verschleiß auf. Ebenso kann die Hubeinrichtung einen oder mehrere aus- und einfahrbare hydraulische Kolben und/oder Zylinder aufweisen.

In einer weiteren Ausführungsform weist die Durchstoßeinrichtung eine Hohlnadel und eine Krafteinheit zum Durchstoßen des Gehäuses der jeweiligen Kassette und/oder Durchleiten der Farbe in das Innere der jeweiligen Kassette auf.

Eine "Krafteinheit" ist insbesondere ein Bauteil oder eine Baugruppe, welches durch Aufbringen einer Kraft eine Bewegung der Durchstoßeinrichtung und/oder der Hohlnadel induziert und dadurch das jeweilige Gehäuse der Kassette durchstoßen wird. Bei einer Krafteinheit kann es sich beispielsweise um ein pyrotechnisches Kraftelement handeln, bei dem durch eine ausgelöste chemische Zustandsänderung eine Bewegung der Durchstoßeinrichtung und/oder der Hohlnadel bewirkt wird. Die Krafteinheit kann insbesondere als Zündquelle, beispielsweise eine Platzpatrone, ein pyrotechnischer Zünder oder als Gaskartusche ausgebildet sein. Durch die Sprengung bei Aktivierung dieser Zündquelle wird eine Kraft ausgeübt, bei der die Durchstoßeinrichtung, beispielsweise eine hohle Nadel, nach unten gedrückt wird, wodurch diese den Deckel der Geldkassette durchstößt.

Um eine definierte lineare Bewegung zu induzieren, weist die Färbeeinrichtung oder weisen die Färbeeinrichtungen eine Antriebseinheit zum Bewegen der Hubeinrichtung und/oder der Hohlnadel auf.

Somit kann mittels eines elektrischen Antriebes eine Bewegung der Hubeinrichtung und somit eine Höhenverstellung und/oder auch eine Bewegung der Hohlnadel bewirkt werden.

Somit kann alternativ oder ergänzend die Durchstoßbewegung der hohlen Nadel auch über eine separate Antriebseinheit, beispielsweise einen elektrischen Motor, realisiert werden. Gegenüber beispielsweise einem pyrotechnischen Zünder hat die Antriebseinheit insbesondere den Vorteil, dass diese nach Verwendung in einem Sicherheitsfall nicht ausgetauscht werden muss, sondern direkt wiederverwendet werden kann.

Bei einer "Antriebseinheit" handelt es sich insbesondere um eine antreibende Maschine. Bei der Antriebseinheit kann es sich beispielsweise um einen elektrischen Motor und/oder einen Linearmotor handeln. Bevorzugt handelt es sich bei der Antriebseinheit um einen Linearantrieb, welcher ohne Getriebe eine direkte lineare Bewegung der Hubeinrichtung und/oder der Hohlnadel bewirkt.

In einer weiteren Ausführungsform weist der Transportsicherheitsbehälter eine Steuer- und/oder Regeleinrichtung zum Überwachen des Transportsicherheitsbehälters und/oder Auslösen der jeweiligen Einfärbeeinrichtung auf.

Unter einer "Steuereinrichtung" wird insbesondere eine Einrichtung verstanden, welche einen vorgegebenen Wert setzt. Unter einer "Regeleinrichtung" wird insbesondere eine Einrichtung verstanden, welche einen Messwert rückkoppelt und jeweils einen Stellwert einstellt. Somit kann mittels der Steuer- und/oder Regeleinrichtung beispielsweise ein Verschließen der Fächer, eine Geschwindigkeit beim Durchstoßen des Gehäuses der jeweiligen Kassette mit der Durchstoßeinrichtung und/oder eine Ausgabe einer Alarmfunktion eingestellt und/oder geregelt werden. Die Funktionen der Steuer- und/oder Regeleinrichtung können beispielsweise auch mittels eines Smartphones steuerbar sein.

Der Transportsicherheitsbehälter kann außen, beispielsweise oberhalb der Fächer, ein Panel mit einer kompakten Steuerungsanzeige aufweisen, welches beispielsweise auch farblich die jeweilige Sicherheitsstufe anzeigt.

Um die Sicherheit des Transportsicherheitsbehälters weiter zu erhöhen und einen Zugriff zu erschweren, weist der Transportsicherheitsbehälter eine Sicherheitsfolie mit stromdurchfließbaren Alarmfäden, einen Erschütterungssensor, einen Abstandssensor, eine Lichtschranke, eine Positionsbestimmungseinrichtung und/oder eine Kommunikations- und/oder Fernauslösereinrichtung auf.

Somit kann der Transportsicherheitsbehälter weitere Sicherheitsbauteile und Sensoren aufweisen, um einen unberechtigten Zugriff zu überwachen und/oder die Einfärbeeinrichtung auszulösen. Dabei kann es sich um eine Sicherheitsfolie mit stromdurchflossenen Drähten handeln, bei dem eine Beschädigung der Sicherheitsfolie über eine Veränderung des elektrischen Widerstandes detektiert wird und anschließend direkt ein Sicherheitsfall ausgelöst werden kann.

Ebenso kann die verschließbare Tür des Faches einen elektromechanischen Verschluss oder mehrere elektromechanische Verschlüsse aufweisen. Die Verschlüsse können mit Eingabeeinheiten, wie Tastenfeld, Bluetooth, RFID, Schlüssel oder ähnlichen kombiniert und dadurch öffenbar und schließbar sein. Des Weiteren kann über einen Erschütterungssensor, einen Abstandssensor und/oder eine Lichtschranke ein unberechtigter Zugriff auf die in dem Fach gelagerte Kassette registriert werden. Ein Abstandssensor, beispielsweise ein IR-Sensor, kann jedoch auch verwendet werden, um beim Einschieben der Kassette in das Fach das vorgegebene Erreichen einer Endposition der Kassette innerhalb des Fachs zu detektieren, bevor die Kassette mittels der Hubeinrichtung im Fach festgedrückt wird.

Zudem kann der Transportsicherheitsbehälter eine Positionsbestimmungseinrichtung aufweisen, sodass bei einem zu großen Abstand des Transportsicherheitsbehälters zu einem Geldtransportfahrzeug oder dem Fahrer automatisch der Sicherheitsfall und somit ein Einfärben ausgelöst wird. Auch kann mittels einer Kommunikations- und/oder Fernauslöseeinrichtung ein ferngesteuertes Auslösen der Einfärbeeinrichtung veranlasst werden. Somit kann das Auslösen der Einfärbeeinrichtung über eine Zerstörung innerhalb des Transportsicherheitsbehälters, eine Erschütterung, eine Bewegung und/oder zeitlich gesteuert erfolgen. Dementsprechend kann auch eine Freigabe und/oder Ortung des Transportsicherheitsbehälters über verschiedene Vorrichtungen, wie GPS, NFC, elektronische Schlüssel, Fernfreigabe aus dem Transportfahrzeug und/oder direkte Zahlencodeeingabe am Transportsicherheitsbehälter, durchgeführt werden.

Folglich kann ergänzend zu der Einfärbeeinrichtung durch weitere Komponenten eine mehrstufige Sicherheitsbarriere des Transportsicherheitsbehälters realisiert sein.

In einer weiteren Ausführungsform weist der Transportsicherheitsbehälter eine elektrisch angetriebene Treppensteigvorrichtung auf.

Bevorzugt weist der Transportsicherheitsbehälter einen elektrischen Treppensteiger mit einem Akkumulator und Liftfunktion auf. Hierbei ist der elektrische Treppensteiger bevorzugt fest mit dem Transportsicherheitsbehälter verbunden. Somit kann der Transportsicherheitsbehälter selbsttätig mittels des Treppensteigers Treppen und entsprechende Höhen hoch und runter steigen und der Transportsicherheitsbehälter ist mittels des Treppensteigers hochhebbar. Dadurch wird der Kraftaufwand für den Bediener beim Transport reduziert. Insbesondere können dadurch in dem Transportsicherheitsbehälter auch mehr als vier, bevorzugt acht, oder mehr als acht Geldkassetten transportiert werden, ohne dass die Gewichtslast für den Bediener zu groß wird. Somit wird ein leicht durch eine einzelne Person handhabbarer Transportsicherheitsbehälter bereitgestellt, welches schnell in ein Transportfahrzeug verbringbar ist. Dadurch wird auch die Zeit für und die Gefahr von Überfällen reduziert.

Dadurch wird mittels einer elektrisch angetriebenen Treppensteigvorrichtung der Komfort für die Bedienperson erhöht, welche sich vorteilhaft beim Transport durch Bedienen der Treppensteigvorrichtung automatisch immer in der Nähe des Transportsicherheitsbehälters aufhält.

Bei einer "Treppensteigvorrichtung" handelt es sich um jegliche Vorrichtung, welche in der Lage ist, den Transportsicherheitsbehälter über Treppen hinauf- und/oder hinunter zu transportieren. Die Treppensteigvorrichtung weist insbesondere ein spezielles Räder- und/oder Raupensystem zum Überwinden der Treppen auf. Die Treppensteigvorrichtung kann insbesondere den Transport des Transportsicherheitsbehälters über eine Treppe mit Muskelkraft erleichtern oder vollständig übernehmen. Im letzteren Fall übernimmt die Bedienperson hauptsächlich nur noch die räumliche Ausrichtung der Treppensteigvorrichtung. Bei der Treppensteigvorrichtung handelt es sich insbesondere um einen elektrischen Treppensteiger. Bevorzugt weist die Treppensteigvorrichtung einen wiederaufladbaren und/oder austauschbaren Akkumulator auf. Beispielsweise weist die Treppensteigvorrichtung eine Tragfähigkeit von 170 kg und ein Eigengewicht von 56 kg auf. Die Treppensteigvorrichtung weist beispielsweise eine Abmessung mit einer Länge von 300 mm, einer Breite von 550 mm und einer Höhe von 1.100 mm auf. Die Treppensteigvorrichtung hebt insbesondere den Transportsicherheitsbehälter auch selbsttätig hoch. Hierbei beträgt die Dauer eines Verfahrweges beispielsweise 25 Sekunden.

Darunter, dass die Treppensteigvorrichtung mit dem Transportsicherheitsbehälter fest verbunden ist, wird insbesondere eine tragfähige feste Verbindung verstanden. Die feste Verbindung kann insbesondere lösbar oder nicht lösbar sein. Somit kann es sich bei der festen Verbindung um eine stoffschlüssige, kraftschlüssige und/oder reibschlüssige Verbindung handeln.

In einem zusätzlichen Aspekt der Erfindung wird die Aufgabe gelöst durch ein Transportfahrzeug zum Transport eines Transportsicherheitsbehälters, wobei das Transportfahrzeug einen Laderaum mit einer Ladefläche aufweist, und dem Transportfahrzeug ein zuvor beschriebener Transportsicherheitsbehälter zugeordnet ist und das Transportfahrzeug eine ausfahrbare Plattform und/oder eine Transporthebe- und/oder -verschiebeeinrichtung aufweist, sodass der Transportsicherheitsbehälter mittels seiner elektrisch angetriebenen Treppensteigvorrichtung selbsttätig und/oder mittels der Transporthebe- und/oder -verschiebeeinrichtung auf die Ladefläche anhebbar ist.

Bei dem Transportfahrzeug kann es sich um jegliches Kraftfahrzeug handeln. Bei dem Transportfahrzeug handelt es sich insbesondere um ein Geld- und/oder Werttransportfahrzeug. Das Transportfahrzeug weist insbesondere ein LKW-Fahrgestell mit einem gepanzerten Aufbau auf.

Bei einer "Transporthebe- und/oder -verschiebeeinrichtung" handelt es sich insbesondere um eine Einrichtung, mit welcher der Transportsicherheitsbehälter alleine oder mit seiner verbundenen elektrisch angetriebenen Treppensteigvorrichtung auf die Ladefläche des Transportfahrzeuges hebbar und/oder innerhalb des Laderaums vertikal und/oder horizontal bewegbar ist. Bei einer Transporthebe- und/oder -verschiebeeinrichtung kann es sich beispielsweise um ein Schienensystem an der Decke des Transportfahrzeuges und/oder um eine Hubvorrichtung an der Ladetür des Transportfahrzeuges handeln, wobei die Hubvorrichtung beispielsweise elektrisch, pneumatisch und/oder mittels Zugketten beweglich ist.

Das Transportfahrzeug weist bevorzugt unten eine ausfahrbare Plattform, ein ausklappbares Transportblech und/oder Hubblech auf, worauf sich der Treppensteiger zur Aufnahme auf die Ladefläche des Transportfahrzeuges aufsetzen kann. Alternativ oder ergänzend kann das Fahrzeug auch eine Transporthebe- und/oder -verschiebeeinrichtung aufweisen. Bevorzugt wird der Transportsicherheitsbehälter mit nach hinten ausgerichtetem Treppensteiger direkt auf dem hinteren Abschnitt der Ladefläche des Transportfahrzeuges aufgenommen, in das Fahrzeuginnere verbracht und anschließend transportiert.

Die Steuer- und Regeleinrichtung des Transportsicherheitsbehälters ist entsprechend mit dem Bordsystem des Transportfahrzeuges koppelbar und es erfolgt eine Aufnahme des Transportsicherheitsbehälters und/oder ein Öffnen und Nachladen des Akkus des aufgenommenen Transportsicherheitsbehälters erst nach Freigabe durch den Fahrer des Transportfahrzeuges.

In einer weiteren Ausführungsform weist das Transportfahrzeug eine Sicherheitsschleuse zum Verbinden des auf die Ladefläche aufgenommenen Transportsicherheitsbehälters mit dem Inneren des Laderaums auf.

Somit wird die Sicherheit beim Einladen des Transportsicherheitsbehälters in das Transportfahrzeug weiter erhöht und die Zugangsbeschränkung verbessert.

Im Weiteren wird die Erfindung anhand von Ausführungsbeispielen näher erläutert. Es zeigen
- Figur 1: eine stark schematische dreidimensionale Darstellung eines Geldtransportsafes mit verbundenem Treppensteiger,
- Figur 2: eine stark schematische Darstellung einer Einfärbeeinrichtung mit Schnitt durch eine Durchstoßeinrichtung,
- Figur 3: eine stark schematische dreidimensionale Darstellung der Außenansicht auf eine Einfärbeeinrichtung angeordnet in einem Fach auf einer Geldkassette, und
- Figur 4: eine stark schematische Darstellung eines Ausschnitts der Einfärbeeinrichtung.

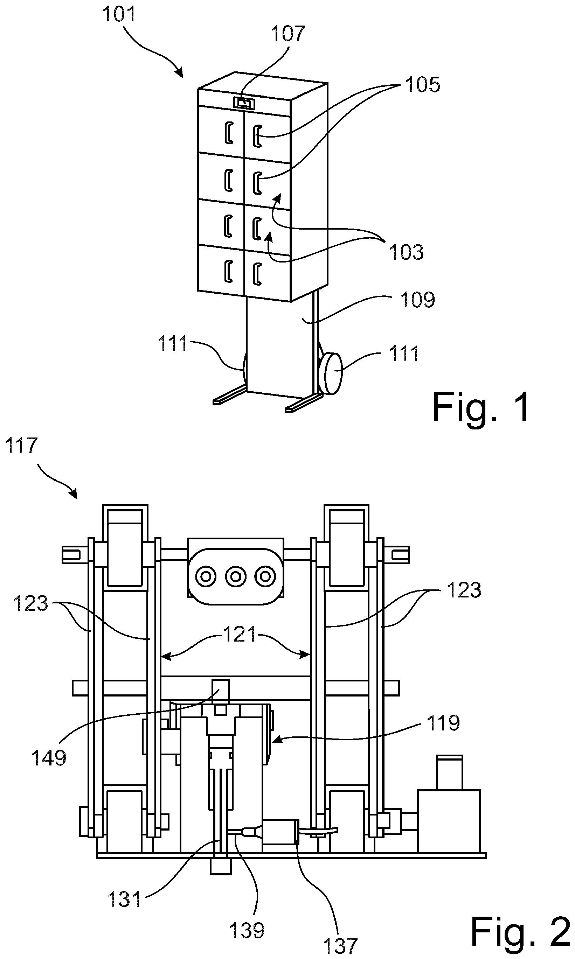

Ein Geldtransportsafe 101 weist acht verschließbare Fächer 103 auf, welche jeweils mit einem Griff 105 versehen sind. Oben am Geldtransportsafe 101 ist ein Panel 107 sichtbar angeordnet. Der Geldtransportsafe 101 ist fest mit einem Treppensteiger 109 verbunden, welcher beidseitig zwei Räder 111 aufweist und aufgrund eines nicht sichtbaren elektrischen Antriebs sowohl Treppen hoch- und runtersteigen als auch, wie in Figur 1 gezeigt, den Geldtransportsafe 101 selbst anheben kann.

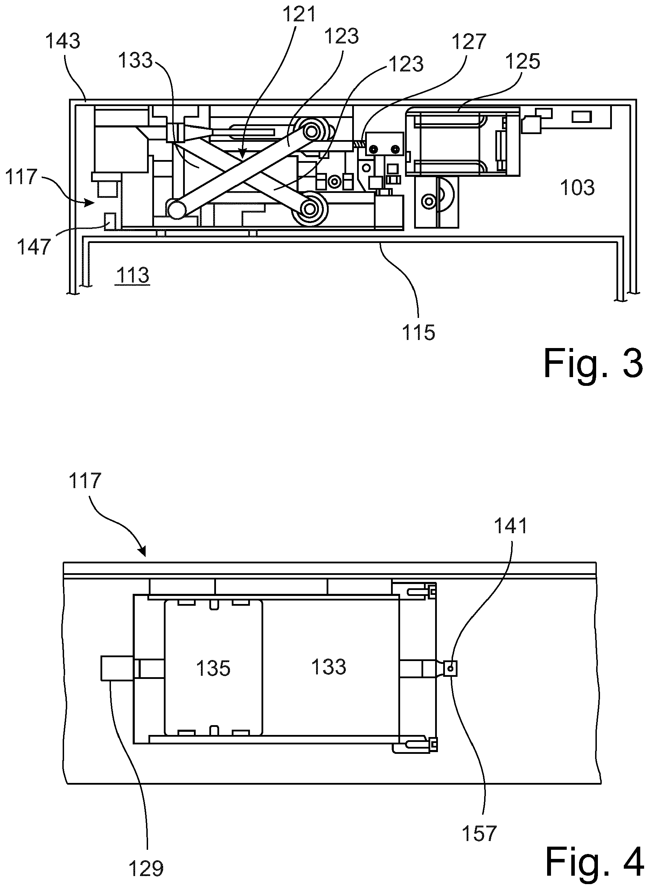

Im Inneren jeden Faches 103 ist eine Einfärbeeinrichtung 117 angeordnet. Die Einfärbeeinrichtung 117 weist eine Scherenhubeinrichtung 121 mit Scheren 123 und eine Durchstoßeinrichtung 119 auf. Mittels eines Linearantriebs 125 und einer Spindelgewindestange 127 ist die Scherenhubeinrichtung 121 drehangetrieben und der Hub mittels der Spindelgewindestange 127 höhenverstellbar (siehe Figuren 2 und 3).

Die Durchstoßeinrichtung 119 weist eine bewegliche Hohlnadel 131 und ein pyrotechnisches Kraftelement 149 als Krafteinheit auf. Seitlich zu einem vertikalen Kanal, in dem die Hohlnadel 131 angeordnet ist, ist eine Zuleitung 139 ausgebildet, welche mit einem Schlauchanschluss 137 verbunden ist, von welchem über einen in Figur 2 nicht gezeigten Schlauch Tinte aus einem Tintenbehälter 133 über einem Schlauchanschluss 157 in die Durchstoßeinrichtung 119 drückbar ist. Dazu weist die Einfärbeeinrichtung 117 eine CO₂-Kartusche 129, einen Kolben 135, den Tintenbehälter 133 und ein Rückschlagventil 141 integriert im Schlauchanschluss 157 auf.

Die Einfärbeeinrichtung 117 ist an einer Oberseite der Scherenhubeinrichtung 121 fest an einer Unterseite einer Decke 143 des Faches 103 montiert. Die Scheren 123 befinden sich im eingefahrenen Zustand, sodass die Einfärbeeinrichtung 117 mit der Scherenhubeinrichtung 121 eine minimale Höhe aufweist. Eine Geldkassette 113 wird unterhalb der Einfärbeeinrichtung 117 in das Fach 103 geschoben und mittels des Linearantriebs 125 und der Spindelgewindestange 127 werden die Scheren 123 der Scherenhubeinrichtung 121 so weit in der Höhe ausgefahren, dass diese bei einer maximal möglichen Ausdehnung von oben auf einen Kassettendeckel 115 der Geldkassette 113 drücken. Hierbei ist die korrekte Positionierung der Geldkassette 113 über eine Lichtschranke 147 überprüft worden.

Bei einem Geldtransport mit dem Geldtransportsafe 101 durch einen Mitarbeiter einer Geldtransportfirma ist aufgrund eines versuchten Diebstahls mit gewaltsamer Öffnung des Faches 103 ein Sicherheitsalarm ausgelöst. Dieser Alarmzustand ist am Panel 107 durch ein rotes Aufblinken des Displays angezeigt, kann zudem akustisch erfolgen, und automatisch wird die Einfärbeeinrichtung 117 aktiviert. Durch Zünden des pyrotechnischen Kraftelementes 149 wird die Hohlnadel 131 aufgrund der Krafteinwirkung nach unten gedrückt, sodass diese den Kassettendeckel 115 durchstößt. Gleichzeitig wird ein in Figur 4 nicht gezeigtes Ventil frei geschaltet und das CO₂-Gas strömt aus der CO₂-Kartusche 129 und drückt gegen den Kolben 135, welcher wiederum die Tinte aus dem Tintenbehälter 133 über den Schlauchanschluss 157 mit dem Rückschlagventil 141, die nicht in Figur 4 und Figur 2 gezeigten Schläuche und über den Schlauchanschluss 137 in die Zuleitung 139 der Durchstoßeinrichtung 119 drückt, wobei die Tinte aus der Zuleitung 139 aufgrund der nach unten bewegten Hohlnadel 131 direkt durch die Hohlnadel 131 in das Innere der Geldkassette 113 gedrückt wird und dort die gelagerten Geldscheine einfärbt.

Somit wird ein Geldtransportsafe 101 bereitgestellt, welcher eine Einfärbeeinrichtung 117 innerhalb des jeweiligen Faches 103 aufweist, die flexibel mit jeder Art von Geldkassette 113 verwendbar ist, wobei der Geldtransportsafe 101 ohne großen Kraftaufwand aufgrund des Treppensteigers 109 von dem einzelnen Mitarbeiter der Geldtransportfirma bedient werden kann.

### Bezugszeichenliste

- 101: Geldtransportsafe
- 103: Fach
- 105: Griff
- 107: Panel
- 109: Treppensteiger
- 111: Rad
- 113: Geldkassette
- 115: Kassettendeckel
- 117: Einfärbeeinrichtung
- 119: Durchstoßeinrichtung
- 121: Scherenhubeinrichtung
- 123: Scheren
- 125: Linearantrieb
- 127: Spindelgewindestange
- 129: CO₂-Kartusche (Aktivierungseinheit)
- 131: Hohlnadel
- 133: Tintenbehälter
- 135: Kolben
- 137: Schlauchanschluß für Tinte
- 139: Zuleitung
- 141: Rückschlagventil
- 143: Decke des Faches
- 147: Lichtschranke
- 149: Pyrotechnisches Kraftelement (Krafteinheit)
- 157: Schlauchanschluß

## Patentansprüche

1. Transportsicherheitsbehälter (101) zum Transport von Wertgegenständen, wobei der Transportsicherheitsbehälter mindestens ein verschließbares Fach (103) zur Aufnahme einer zuordenbaren Kassette (113) mit einem Gehäuse und eine Einfärbeeinrichtung (117) zum Einfärben von in der Kassette (113) gelagerten Wertgegenständen aufweist, wobei die Einfärbeeinrichtung (117) innerhalb des mindestens einem Fach (103) benachbart zur zuordenbaren Kassette angeordnet ist und eine Aktivierungseinheit (129) und einen Farbbehälter (133) aufweist, **dadurch gekennzeichnet, dass** die Einfärbeeinrichtung (117) eine Durchstoßeinrichtung (119) zum Durchstoßen des Gehäuses der zuordenbaren Kassette (113) aufweist, sodass im Sicherheitsfall das Gehäuse der zugeordneten Kassette (113) mittels der Durchstoßeinrichtung (119) von außen durchstoßbar ist und mittels der Aktivierungseinheit (129) eine Farbe aus dem Farbbehälter (133) über die Durchstoßeinrichtung (119) in ein Inneres der Kassette (113) zum Einfärben der Wertgegenstände einbringbar ist.

2. Transportsicherheitsbehälter (101) nach Anspruch 1, **dadurch gekennzeichnet, dass** der Transportsicherheitsbehälter (101) ein zweites verschließbares Fach, ein drittes verschließbares Fach, ein viertes verschließbares Fach und/oder weitere verschließbare Fächer (103), bevorzugt insgesamt acht verschließbare Fächer, aufweist, wobei jeden verschließbaren Fach eine jeweilige Kassette (113) zuordenbar ist und/oder jedes verschließbare Fach eine Einfärbeeinrichtung (117) aufweist.

3. Transportsicherheitsbehälter (101) nach Anspruch 1 oder 2, **dadurch gekennzeichnet, dass** die Einfärbeeinrichtung (117) oder die Einfärbeeinrichtungen eine Hubeinrichtung (121) zum Einklemmen der jeweiligen Kassette (113) aufweist oder aufweisen, wobei die Hubeinrichtung (121) zwischen einer Innenseite (143) des jeweiligen Faches (103) und einer Außenseite (115) des Gehäuses der zuordenbaren Kassette (113) angeordnet ist.

4. Transportsicherheitsbehälter (101) nach einem der vorherigen Ansprüche, **dadurch gekennzeichnet, dass** die Durchstoßeinrichtung (119) eine Hohlnadel (131) und eine Krafteinheit (149) zum Durchstoßen des Gehäuses der jeweiligen Kassette (113) und/oder Durchleiten der Farbe in das Innere der jeweiligen Kassette (113) aufweist.

5. Transportsicherheitsbehälter (101) nach Anspruch 3 oder 4, **dadurch gekennzeichnet, dass** die Einfärbeeinrichtung (117) oder die Einfärbeeinrichtungen eine Antriebseinheit (125) zum Bewegen der Hubeinrichtung (121) und/oder der Hohlnadel (131) aufweist oder aufweisen.

6. Transportsicherheitsbehälter (101) nach einem der vorherigen Ansprüche, **dadurch gekennzeichnet, dass** der Transportsicherheitsbehälter (101) eine Steuer- und/oder Regeleinrichtung zum Überwachen des Transportsicherheitsbehälters (101) und/oder Auslösen der jeweiligen Einfärbeeinrichtung (117) aufweist.

7. Transportsicherheitsbehälter (101) nach einem der vorherigen Ansprüche, **dadurch gekennzeichnet, dass** der Transportsicherheitsbehälter (101) eine Sicherheitsfolie mit stromdurchfließbaren Alarmfäden, einen Erschütterungssensor, einen Abstandssensor, eine Lichtschranke (147), eine Positionsbestimmungseinrichtung und/oder eine Kommunikations- und/oder Fernauslöseeinrichtung aufweist.

8. Transportsicherheitsbehälter (101) nach einem der vorherigen Ansprüche, **dadurch gekennzeichnet, dass** der Transportsicherheitsbehälter (101) eine elektrisch angetriebene Treppensteigvorrichtung (109) aufweist.

9. Transportfahrzeug zum Transport eines Transportsicherheitsbehälters, wobei das Transportfahrzeug einen Laderaum mit einer Ladefläche aufweist, **dadurch gekennzeichnet, dass** dem Transportfahrzeug ein Transportsicherheitsbehälter (101) nach einem der Ansprüche 1 bis 8 zugeordnet ist und das Transportfahrzeug eine ausfahrbare Plattform und/oder eine Transporthebe- und/oder -verschiebeeinrichtung aufweist, sodass der Transportsicherheitsbehälter (101) mittels seiner elektrisch angetriebenen Treppensteigvorrichtung (109) selbsttätig und/oder mittels der Transporthebe- und/oder - verschiebeeinrichtung auf die Ladefläche anhebbar ist.

10. Transportfahrzeug nach Anspruch 9, **dadurch gekennzeichnet, dass** das Transportfahrzeug eine Sicherheitsschleuse zum Verbinden des auf die Ladefläche aufgenommenen Transportsicherheitsbehälters (101) mit einem Inneren des Laderaums aufweist.
